# EUROPÄISCHE PATENTANMELDUNG

(11) **EP 1 016 503 A2**
(43) Veröffentlichungstag der Anmeldung: **05.07.2000**
(21) Anmeldenummer: 99811097.7
(22) Anmeldetag: 29.11.1999
(51) Int. Cl.: B25D 11/06

(54) **Handgeführtes Bohr- und/oder Meisselgerät**

(30) Priorität: 03.12.1998 DE 19855750
(71) Anmelder: HILTI Aktiengesellschaft, 9494 Schaan (LI)
(72) Erfinder: Vuillemin, Ronald, 7307 Jenins (CH); Jufer, Marcel, 1015 Lausanne (CH)
(74) Vertreter: Wildi, Roland

(57) **Zusammenfassung**

Ein handgeführtes Bohr- und/oder Meisselgerät weist innerhalb seines Gerätegehäuses (2) ein Schlagwerk (11) zur Erzeugung und Abgabe von axialen Schlägen auf ein in eine mit dem Gerätegehäuse (2) verbundene Werkzeugaufnahme (9) eingespanntes Bohr-bzw. Meisselwerkzeug. Das auf dem Prinzip polarisierter Reluktanzen beruhende Schlagwerk (11) umfasst einen Schlagkörper (12), der mit Hilfe eines steuerbaren Magnetfelds periodisch axial verschiebbar ist, das von einer Anordnung aus Spulen (13) und wenigstens einem hochenergetischen Permanentmagneten (14) hervorgerufen ist.

## Beschreibung

Die Erfindung betrifft ein handgeführtes Bohr- und/oder Meisselgerät gemäss dem Oberbegriff des Patentanspruchs 1.

In der Bohrmontage, im Installationsbereich, in der Abbautechnik usw. werden zum Bohren und auch zum Meisseln meist elektrisch betreibbare, handgeführte Geräte eingesetzt. Die handgeführten Bohr- und/oder Meisselgeräte weisen üblicherweise einen in einem Gerätegehäuse angeordneten Antrieb für ein in eine Werkzeugaufnahme eingespanntes Bohr- bzw. Meisselwerkzeug auf. Zur Verbesserung der Abbauleistung beim Bohren und insbesondere zum Meisseln sind die Geräte mit einem Schlagwerk ausgestattet, das im Betrieb axiale Schläge erzeugt, die auf das in die Werkzeugaufnahme eingespannte Werkzeug abgegeben werden. Zur Erzeugung von periodischen axialen Schlägen sind aus dem Stand der Technik verschiedene Lösungen bekannt. Bei einer Art dieser bekannten Schlagwerke laufen im Betrieb zwei an ihren Flachseiten mit nockenartigen Erhebungen versehene Scheiben ratschenartig aneinander ab. Derartige Ratschenschlagwerke erzeugen axiale Schläge mit einer relativ niedrigen Einzelschlagenergie. Sie sind im Grossteil der aus dem Heimwerkerbereich bekannten Schlagbohrmaschinen zu finden. Bei Federnockenschlagwerken ist eine der aneinander ablaufenden Nockenscheiben federbelastet. Im Betrieb wird die Feder der federbelasteten Nockenscheibe periodisch gespannt und wieder gelöst. Die Feder erhöht die Einzelschlagenergie der Nockenscheibe, die an das in die Werkzeugaufnahme eingespannte Werkzeug abgegeben wird. Ein weiterer bekannter Schlagwerkstyp zur Erzeugung von axialen Schlägen mit immer noch relativ niedrigen Einzelschlagenergien sind Federbügelschlagwerke, bei denen ein auf einem periodisch spann- und wieder lösbaren Federbügel angeordnetes Schlagelement gegen das in die Werkzeugaufnahme des Handgeräts eingespannte Werkzeug beschleunigt wird.

Für die Erzeugung und Abgabe von axialen Schlägen mit grösseren Einzelschlagenergien von beispielsweise etwa 4 J bis 9 J und mehr werden elektropneumatische Schlagwerke eingesetzt, wie sie beispielsweise auch in den von der Anmelderin angebotenen Bohr- und/oder Meisselgeräten angeordnet sind. Bei elektropneumatischen Schlagwerken wird ein als Flugkolben ausgebildeter Schlagkörper von einem elektrisch angetriebenen Erregerkolben in einem zylindrischen Führungsrohr in eine periodische, axiale Hin- und Herbewegung versetzt. Bei der axialen Vorwärtsbewegung in Richtung des Werkzeugs schlägt der Flugkolben auf das Einsteckende des Werkzeugs oder auf ein Zwischendöpperelement und gibt dabei den grössten Teil seiner kinetischen Energie als axialen Schlag ab. Ein Luftpolster zwischen dem Erregerkolben und dem Flugkolben verhindert bei der Rückwärtsbewegung des Flugkolbens ein Zusammenstossen dieser beiden Elemente.

Die geschilderten, im wesentlichen mechanisch erregten Schlagwerke besitzen entweder eine niedrige oder eine grosse Einzelschlagenergie. Bei Bohr- und/oder Meisselanwendungen kann jedoch nicht jeder Untergrund mit der gleichen Einzelschlagenergie bearbeitet werden. So sind beispielsweise für das Bohren in Ziegelmauerwerk weit weniger starke Axialstösse erforderlich als für das Bohren in Gestein oder Beton. Bei zu grossen Schlagenergien kann es beispielsweise beim Bohren in Ziegelmauerwerk zu einer Zerstörung des Untergrunds kommen. Andererseits ist mit Handgeräten mit Schlagwerken für niedrige Schlagenergien beispielsweise beim Bohren in Beton oder Gestein trotz hoher Anstrengungen für das Anpressen des Geräts kaum ein Bohrfortschritt erzielbar.

Neben den geschilderten, im wesentlichen mechanisch erregten Schlagwerken sind im Stand der Technik auch elektromagnetische Schlagwerke vorgeschlagen worden, bei denen ein magnetisierbarer Schlagkolben im Magnetfeld im Inneren einer Spule geführt ist. Aus der US-A-4,553,074 ist beispielsweise ein elektromagnetisches Schlagwerk bekannt, bei dem ein Schlagkolben im elektrischen Feld im Inneren einer zylindrischen Statorspule geführt ist. Sobald der Spule ein Stromimpuls zugeführt wird, wird der Schlagkolben in Richtung des in die Werkzeugaufnahme eingespannten Werkzeugs beschleunigt. Nach der Stossabgabe prallt der Schlagkolben zurück und wird beispielsweise durch eine Rückholfeder in die Gegenrichtung bewegt. Für die Rückholung des Schlagkolbens kann anstelle einer Rückholfeder beispielsweise auch ein umgekehrt gepoltes magnetisches Feld herangezogen werden. Danach beginnt der Schlagvorgang von neuem.

Nachteilig an den bekannten elektromagnetischen Schlagwerken ist, dass sie üblicherweise einen sehr schlechten elektrischen Wirkungsgrad aufweisen. Daraus resultieren nur vergleichsweise geringe Einzelschlagenergien. Veränderte Konstruktionen, die einen höheren elektrischen Wirkungsgrad und damit höhere Einzelschlagenergien aufweisen, besitzen wiederum den Nachteil einer relativ niedrigen Lebenserwartung.

Aufgabe der vorliegenden Erfindung ist es, ein handgeführtes Bohr- und/oder Meisselgerät zu schaffen, das mit einem Schlagwerk ausgestattet ist, dessen Schlagenergie und Schlagleistung bei Bedarf einfach an die jeweiligen Erfordernisse anpassbar sind. Die Schlagenergie des Schlagwerks soll in einem ausreichend grossen Umfang variierbar sein. Dabei soll das Schlagwerk eine gute Energiebilanz aufweisen und sich durch eine ausreichend hohe Lebenserwartung auszeichnen.

Die Lösung dieser Aufgaben besteht in einem handgeführten Bohr- und/oder Meisselgerät, welches die im kennzeichnenden Abschnitt des Patentanspruchs 1 angeführten Merkmale aufweist. Das Schlagwerk des erfindungsgemässen Bohr- und/oder Meisselgeräts umfasst einen Schlagkörper, der mit Hilfe eines steuerbaren Magnetfelds periodisch axial verschiebbar ist, das von einer Anordnung aus Spulen und wenigstens einem hochenergetischen Permanentmagneten hervorgerufen ist.

Das Schlagwerk des erfindungsgemässen handgeführten Bohr- und/oder Meisselgeräts basiert auf dem Prinzip der polarisierten Reluktanzen. Dabei wird das von einer Spulenanordnung hervorgerufene, bezüglich seiner Stärke einstellbare Magnetfeld entlang seiner axialen Erstreckung durch einen hochenergetischen Permanentmagneten beeinflusst. Je nach Orientierung des Stromflusses in der Spulenanordung wird das von der Spule hervorgerufene Magnetfeld bereichsweise durch das Magnetfeld des Permanentmagneten verstärkt bzw. abgeschwächt. Die aus diesen Feldgradienten resultierende Kraft beschleunigt den Schlagkörper in die gewünschte Richtung. Die Beschleunigung ist einfach variierbar, indem die Feldstärke des von der Spulenanordnung hervorgerufenen Magnetfeldes verändert wird. Durch die Veränderung der Beschleunigung ist aber auch die Endgeschwindigkeit des Schlagkörpers und damit seine kinetische Energie einfach veränderbar. Durch die bipolare Ausnutzung des Feldgradienten sind die zur Erzielung der Beschleunigungskraft für eine gewünschte Einzelschlagenergie erforderlichen Absolutfeldstärken niedriger als bei den bekannten elektromagnetischen Schlagwerken. Daraus ergibt sich eine geringere Belastung der Spulenanordnung und eine erhöhte Lebenserwartung.

Prinzipiell könnten der Permanentmagnet und/oder die Spulenanordnung Bestandteile des axial beweglichen Schlagkörpers sein. Es erweist sich jedoch von Vorteil, wenn die Spulen und der Permanentmagnet innerhalb des Gerätegehäuses ortsfest angeordnet sind. Dadurch besteht beispielsweise hinsichtlich des Materials für den hochenergetischen Permanentmagneten eine grössere Auswahl, da keine Rücksicht auf eventuelle Entmagnetisierungen des Permanentmagneten durch Stosseinwirkung genommen werden muss. Ausserdem sind Materialien für hochenergetische Permanentmagneten vielfach auch relativ spröde. Die statische Spulenanordnung verhindert Probleme, die beispielsweise bei einer auf dem Schlagkörper angeordneten Spulenanordnung mit den Kontaktstellen für die Spulen auftreten könnten und sich infolge der grossen Vibrationen negativ auf die Lebensdauer des Schlagwerks auswirken könnten.

Indem bei einer Variante der Erfindung der Schlagkörper in einem zylindrischen Führungsrohr geführt ist, das in axialer Verlängerung der Werkzeugaufnahme angeordnet ist und den Permanentmagneten durchsetzt, ist das Schlagwerk gegen äussere Verschmutzungen abgedichtet. Der Permanentmagnet kann zylindrisch ausgebildet sein oder aus Magnetsegmenten zusammengesetzt sein, die zwischen den Blechpaketen der Spulen angeordnet sind.

An dem von der Werkzeugaufnahme abgewandten Endabschnitt des Führungsrohrs ist eine Einrichtung zur Abbremsung und Umkehrung der axialen Bewegungsrichtung des Schlagkörpers angeordnet. Die Einrichtung kann eine elektrische Einrichtung, beispielsweise eine Induktivität, oder ein mechanisches Bauteil sein. Vorzugsweise besteht die Einrichtung zur Abbremsung und Umkehrung der axialen Bewegungsrichtung des Schlagkörpers aus einem federnden Aufprallelement, dessen Masse vorzugsweise grösser ist als die Masse des Schlagkörpers. Dadurch kann die Bewegungsrichtung des Schlagkörpers bei möglichst geringem Energieverlust umgekehrt werden. Gleichzeitig werden dadurch auch unangenehme Erschütterungen durch das Schlagwerk vom Anwender ferngehalten.

In einer vorteilhaften Variante der Erfindung ist der Schlagkörper im Führungsrohr zwischen zwei vorzugsweise vorgespannten Federn gelagert. Die vordere Feder dient zusammen mit der rückwärtigen Feder der Umlenkung der Bewegungsrichtung des Schlagkörpers nach seiner Energie- und Impulsabgabe an das Werkzeug. Bei geeigneter Ausbildung bietet die vordere Feder auch die Möglichkeit einer Schlagstärkenregulierung. Beispielsweise kann die Vorspannung der Feder veränderbar sein. Bei der Bewegung des Schlagkörpers in die Gegenrichtung wird der Flugkolben abgebremst und schliesslich wieder in die ursprüngliche Richtung beschleunigt. Die beiden Federn sind vorzugsweise unter einer gewissen Vorspannung gehalten. Auf diese Weise wird verhindert, dass durch ein allfälliges Aufprallen des Schlagkörpers Resonanzfrequenzen der Federn angeregt werden. Durch diese Massnahme wird die Lebensdauer der Federn erhöht.

Für die universelle Einsetzbarkeit des handgeführten Bohr- und/oder Meisselgerätes ist die Magnetfeldstärke des aus der Spulenanordnung und dem wenigstens einen Permanentmagneten resultierenden Magnetfelds vorzugsweise derart steuerbar, dass der Schlagkörper eine Einzelschlagenergie von etwa 0,05 J bis etwa 30 J aufweist, wobei die Einzelschlagenergie bei Bedarf innerhalb einer Energiespanne von etwa 9 J, vorzugsweise wenigstens etwa 2 J, einstellbar ist.

Aus Gewichtsgründen und hinsichtlich der Energieausnutzung ist es von Vorteil, wenn der Schlagkörper eine Masse von etwa 0,2 kg bis etwa 1,5 kg aufweist.

Für den hochenergetischen Permanentmagneten kommen mit Vorteil magnetisierbare Materialien zum Einsatz, die eine Remanenz grösser als 0,9 T bei einer Induktions-Koerzitivfeldstärke aufweisen, die grösser ist als 600 kA/m. Vorzugsweise werden Seltenerdmagnete eingesetzt, Beispielsweise umfasst der hochenergetische Permanentmagnet eine Legierung aus NdFeB oder SmCo.

Im folgenden wird die Erfindung unter Bezugnahme auf in den Zeichnungen schematisch dargestellte Ausführungsbeispiele näher erläutert. Es zeigen:
- Fig. 1: ein Blockschema eines handgeführten Bohr- und/oder Meisselgeräts;
- Fig. 2: eine Prinzipdarstellung eines auf dem Prinzip polarisierter Reluktanzen basierenden Aktuators;
- Fig. 3: ein erstes Ausführungsbeispiel des erfindungsgemässen Schlagwerks; und
- Fig. 4: ein zweites Ausführungsbeispiel des erfindungsgemässen Schlagwerks in teilweise geöffneter, perspektivischer Darstellung.

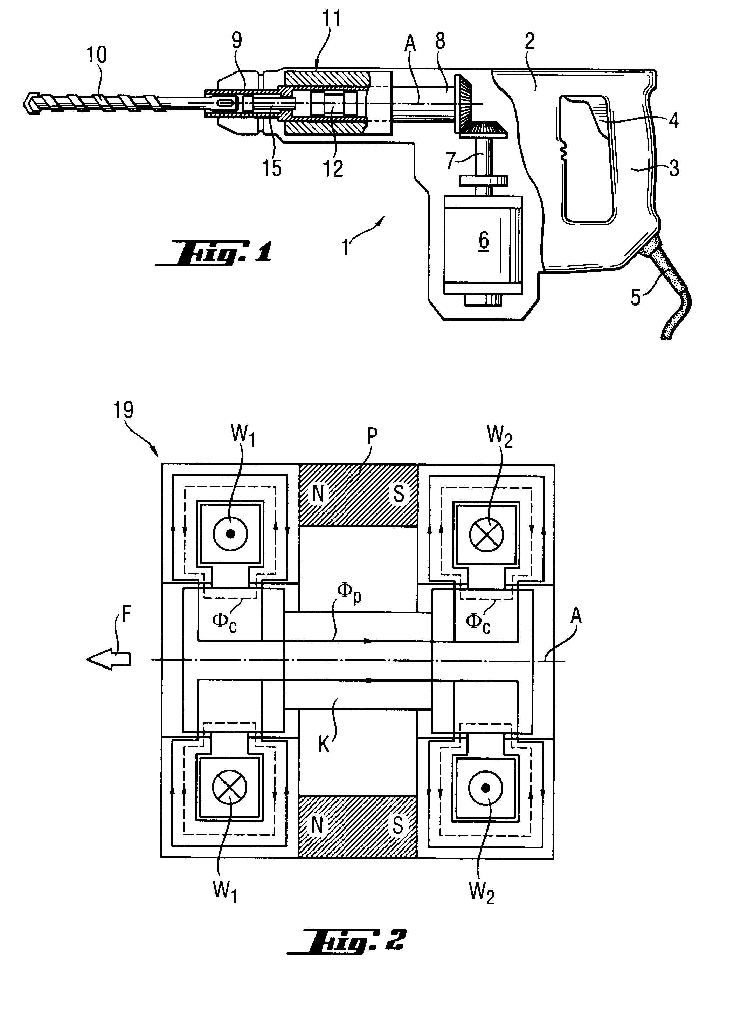

Das in Fig. 1 schematisch dargestellte handgeführte Bohr- und/oder Meisselgerät ist gesamthaft mit dem Bezugszeichen 1 versehen. Es weist ein Gerätegehäuse 2 auf, das mit einem Handgriff 3 verbunden ist. Am Handgriff 3 ist ein Betätigungsschalter 4 angedeutet, mit dem das Gerät 1 in Betrieb setzbar ist. Zur Energieversorgung des elektrisch betriebenen Geräts 1 ist dieses über ein Anschlusskabel 5 mit einer Stromquelle verbindbar. Innerhalb des Gerätegehäuses 2 ist ein Antriebsmotor 6 angedeutet, dessen Antriebswelle 7 drehschlüssig mit einer Drehspindel 8 verbunden ist. An ihrem aus dem Gerätegehäuse 2 austretenden Ende ist die Drehspindel 8 mit einer Werkzeugaufnahme 9 verbunden. Die Werkzeugaufnahme 9 dient der Aufnahme eines Bohr- bzw. Meisselwerkzeugs, das in Fig. 1 mit dem Bezugszeichen 10 angedeutet ist. Innerhalb des Gerätegehäuses 2 ist ein Schlagwerk 11 vorgesehen, das vorzugsweise koaxial zum Werkzeug 10 angeordnet ist. Das Schlagwerk 11 umfasst einen Schlagkörper 12, der periodisch entlang der Achse A des Schlagwerks 11 hin- und her bewegbar ist. Bei der Vorwärtsbewegung in Richtung des in die Werkzeugaufnahme 9 eingespannten Werkzeugs 10 schlägt der Schlagkörper 12 gegen das rückwärtige Ende des Werkzeugs bzw. eines Zwischendöpperelements und gibt dabei einen Grossteil seiner kinetischen Energie impulsgartig an das Werkzeug 10 ab. Das in Fig. 1 angedeutete Schlagwerk 11 basiert auf dem Prinzip polarisierter Reluktanzen und besteht aus einer Spulenanordung und wenigstens einem hochenergetischen Permanentmagneten, in deren Magnetfeld der Schlagkörper 12 periodisch axial verschiebbar ist.

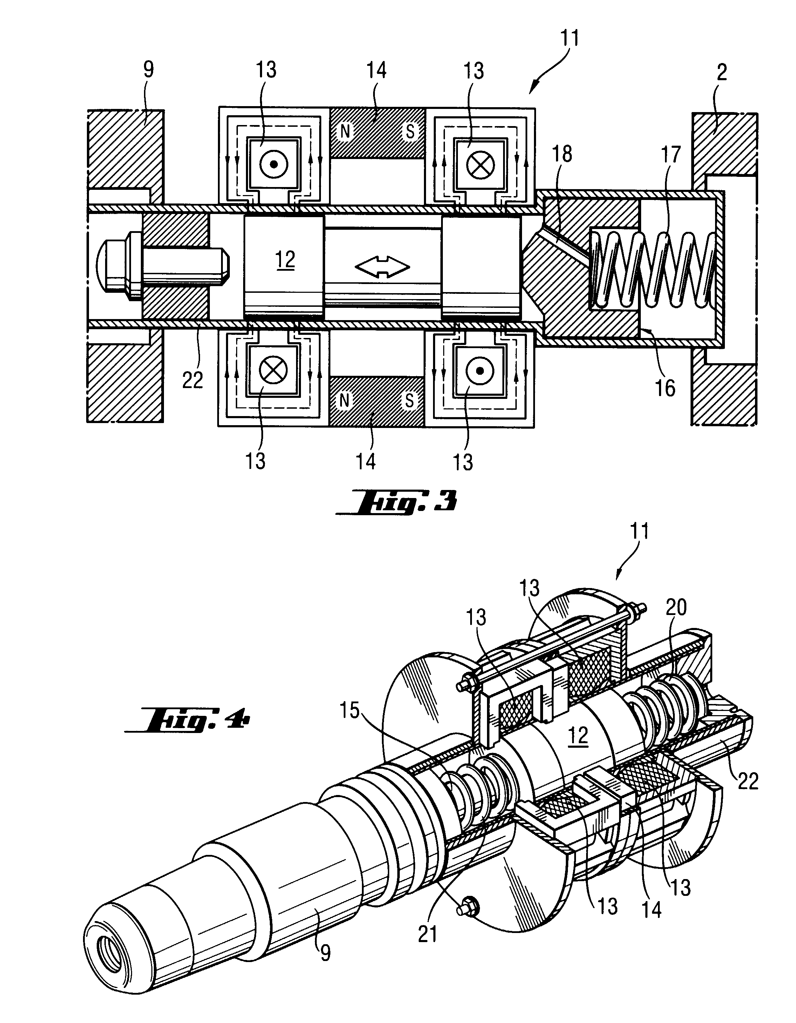

Fig. 2 dient der Illustration des Prinzips polarisierter Reluktanzen, welches die Grundlage des Schlagwerks des erfindungsgemässen handgeführten Bohr- und/oder Meisselgeräts bildet. Ein metallischer Körper K befindet sind innerhalb einer im Axialschnitt dargestellten Spulenanordnung 19. Die Windungen der Spulenanordnung sind jeweils um die Bewegungsachse A des metallischen Körpers K gewickelt. Die Spulenanordnung ist in Fig. 2 jeweils durch die Windungen W₁ bzw. W₂ symbolisiert. Die Fliessrichtung eines durch die Windung W geschickten Stromes ist in dem dargestellten Beispiel derart gewählt, dass mit Bezugnahme auf die Windungsteile oberhalb des metallischen Körpers K bei der Windung W₁ der Strom aus der Bildebene heraus und bei der Windung W₂ in die Bildebene hinein fliesst. Die stromdurchflossenen Windungen W₁ bzw. W₂ sind von Magnetfeldlinien umgeben, die strichliert angedeutet und mit Φ_{c} bezeichnet sind. Die Pfeile geben jeweils die Richtung der Magnetfeldlinien Φ_{c} an. Ein Permanentmagnet P ist derart angeordnet, dass sein magnetischer Nordpol N nach links und der magnetische Südpol S nach rechts ausgerichtet ist. Die den magnetischen Nordpol N und den magnetischen Südpol S verbindenden Magnetfeldlinien sind durchgehend gezeichnet und mit Φₚ bezeichnet. Aus der Darstellung ist unmittelbar ersichtlich, dass die Magnetfeldlinien Φ_{c} und Φₚ der stromdurchflossenen Windung W₁ bzw. W₂ und des Permanentmagneten P links der aus der Zeichenebene heraustretenden bzw. in die Zeichenebene hineingehenden Windungen W₁ bzw. W₂ gleich orientiert sind. Rechts der stromdurchflossenen Windungen W₁ bzw. W₂ verlaufen sie jeweils in entgegengesetzte Richtungen. Auf diese Weise ist verdeutlicht, dass das resultierende Magnetfeld der stromdurchflossenen Windungen W₁ bzw. W₂ und des Permanentmagneten jeweils links der Windungen W₁ bzw. W₂ verstärkt ist, während es rechts der Windungen W₁ bzw. W₂ verringert ist. Aus den lokalen Gradienten des derart polarisierten Magnetfeldes resultiert eine Kraft F, die, gemäss der Darstellung, den metallischen Körper K entlang der Achse A nach links beschleunigt. Zur Umkehrung der resultierenden Kraft genügt es, die Fliessrichtung des Stromes in den Windungen W₁ bzw. W₂ umzukehren.

Fig. 3 zeigt einen schematischen Axialschnitt eines ersten Ausführungsbeispiels des erfindungsgemässen Schlagwerks 11. Der Schlagkörper 12 befindet sich in einem zylindrischen Führungsrohr 22, das beispielsweise einen integralen Bestandteil der Drehspindel bildet. Ausserhalb des Führungsrohres 22 sind eine Spulenanordnung 13 und ein hochenergetischer Permanentmagnet 14 vorgesehen, die koaxial zum Führungsrohr 22 ausgerichtet sind. Die Spulenanordung 13 und der Permanentmagnet 14 sind innerhalb des Gerätegehäuses 2 ortsfest angeordnet. Das Führungsrohr 22 ist verschmutzungssicher abgedichtet. Am einen Ende des Führungsrohres 22, in der Darstellung links, ist die Werkzeugaufnahme 9 angedeutet. Ein in der Werkzeugaufnahme 9 axial verschiebbar gelagerter Zwischendöpper 15 ragt in das Führungsrohr 22 hinein. Am gegenüberliegenden Ende des Führungsrohres 22 ist ein Aufprallelement 16 angeordnet, das über eine Druckfeder 17 federnd gelagert ist. Bei Bestromung der Spulenanordnung 13 wird der Schlagkörper 12 in Richtung des in das Führungsrohr 22 ragenden Zwischendöppers 15 beschleunigt. Beim Aufprall gibt der Schlagkörper 12 einen Grossteil seiner kinetischen Energie an den Zwischendöpper 15 ab. Von diesem wird der impulsartige Stoss an das in die Werkzeugaufnahme 9 eingespannte Werkzeug weitergeleitet. Durch Umkehrung der Stromrichtung in der Spulenanordnung 13 wird der vom Zwischendöpper 15 abprallende Schlagkörper 12 nach rückwärts bewegt, bis er auf das federnd gelagerte Aufprallelement 16 prallt. Die Masse des Aufprallelements 16 ist mit Vorteil grösser als die Masse des Schlagkörpers 12.

Dadurch wird die Bewegungsrichtung des Schlagkörpers 12 bei möglichst geringem Energieverlust wieder umgekehrt und der Schlagzyklus beginnt von neuem. Eine Entlüftungsbohrung 18 im Aufprallelement 16 verhindert, dass ein sich aufbauendes Luftkissen die Schlagwerksleistung beeinflusst.

Bei dem in Fig. 4 dargestellten Ausführungsbeispiel des Schlagwerks 11 ist der innerhalb des Führungsrohres 22 geführte Schlagkörper 12 zwischen zwei vorgespannten Federn 20, 21 gelagert. Der Permanentmagnet 14 ist in Magnetsegmente unterteilt, die zylinderförmig zwischen den Blechpaketen der Spulen 13 angeordnet sind. Bei Erregung durch die Spulenanordung 13 und den Permanentmagneten 14 oszilliert der Schlagkörper 12 zwischen den beiden Federn 20, 21, wobei er axiale Schläge an den in das Führungsrohr 22 ragenden Zwischendöpper 15 abgibt. Die axialen Schläge werden vom Zwischendöpper 15 an ein in die Werkzeugaufnahme 9 eingespanntes Werkzeug weitergeleitet.

Die Auslegung der Spulenanordnung 13 und der wenigstens eine Permanentmagnet 14 sind derart gewählt, dass die vom Schlagkörper 12 abgegebene Einzelschlagenergie zwischen etwa 0,05 J und 30 J beträgt. Die Einstellbarkeit der Einzelschlagenergie überstreicht dabei einen Energiebereich, der etwa 9 J, vorzugsweise wenigstens etwa 2 J beträgt. Die Masse des Schlagkörpers 12 wird zu etwa 0,2 kg bis etwa 1,5 kg gewählt. Für den hochenergetischen Permanentmagneten 14 kommen Materialien zum Einsatz, die eine Remanenz grösser als 0,9 T aufweisen und eine Koerzitivfeldstärke besitzen, die grösser ist als 600 kA/m. Vorzugsweise werden dafür Seltenerdmagneten eingesetzt. Beispielsweise umfasst der hochenergetische Permanentmagnet eine Legierung aus NdFeB oder SmCo.

Die Erfindung ist am Beispiel eines Geräts erläutert worden, das neben dem Schlagwerk auch einen Drehantrieb für ein in die Werkzeugaufnahme eingespanntes Werkzeug aufweist. Es versteht sich, dass das erfindungsgemässe Schlagwerk auch bei reinen Meisselgeräten, die keinen Drehantrieb für das in die Werkzeugaufnahme eingespannte Meisselwerkzeug aufweisen, zur Anwendung kommen kann.

## Patentansprüche

1. Handgeführtes Bohr- und/oder Meisselgerät mit einem innerhalb eines Gerätegehäuses (2) angeordneten Schlagwerk (11) zur Erzeugung und Abgabe von axialen Schlägen auf ein in eine mit dem Gerätegehäuse (2) verbundene Werkzeugaufnahme (9) eingespanntes Bohr- bzw. Meisselwerkzeug (10), **dadurch gekennzeichnet**, dass das Schlagwerk (11) einen Schlagkörper (12) umfasst, der mit Hilfe eines steuerbaren Magnetfelds periodisch axial verschiebbar ist, das von einer Anordnung aus Spulen (13) und wenigstens einem hochenergetischen Permanentmagneten (14) hervorgerufen ist.

2. Handgeführtes Bohr- und/oder Meisselgerät nach Anspruch 1, dadurch gekennzeichnet, dass die Spulenanordnung (13) und der Permanentmagnet (14) innerhalb des Gerätegehäuses (2) ortsfest angeordnet sind.

3. Handgeführtes Bohr- und/oder Meisselgerät nach Anspruch 1 oder 2, dadurch gekennzeichnet, dass der Schlagkörper (12) in einem zylindrischen Führungsrohr (22) geführt ist, das in axialer Verlängerung der Werkzeugaufnahme (9) angeordnet ist und den Permanentmagneten (14) durchsetzt, der gesamthaft zylindrisch ausgebildet bzw. aus zylindrisch angeordneten Magnetsegmenten zusammengesetzt ist.

4. Handgeführtes Bohr- und/oder Meisselgerät nach Anspruch 3, dadurch gekennzeichnet, dass an dem von der Werkzeugaufnahme (9) abgewandten Endabschnitt des Führungsrohrs (22) eine Einrichtung zur Abbremsung und Umkehrung der axialen Bewegungsrichtung des Schlagkörpers (12) angeordnet ist.

5. Handgeführtes Bohr- und/oder Meisselgerät nach Anspruch 4, dadurch gekennzeichnet, dass die Einrichtung zur Abbremsung und Umkehrung der axialen Bewegungsrichtung des Schlagkörpers (12) ein federndes Aufprallelement (16, 17) ist, dessen Masse vorzugsweise grösser ist als die Masse des Schlagkörpers (12).

6. Handgeführtes Bohr- und/oder Meisselgerät nach einem der Ansprüche 3 - 5, dadurch gekennzeichnet, dass der Schlagkörper (12) im Führungsrohr (22) zwischen zwei vorzugsweise vorgespannten Federn (20, 21) gelagert ist.

7. Handgeführtes Bohr- und/oder Meisselgerät nach einem der vorangehenden Ansprüche, dadurch gekennzeichnet, dass die Magnetfeldstärke des aus der Spulenanordnung (13) und dem wenigstens einen Permanentmagneten (14) resultierenden Magnetfelds derart steuerbar ist, dass der Schlagkörper (12) eine Einzelschlagenergie von etwa 0,05 J bis etwa 30 J aufweist.

8. Handgeführtes Bohr- und/oder Meisselgerät nach Anspruch 7, dadurch gekennzeichnet, dass die Einzelschlagenergie bei Bedarf innerhalb einer Energiespanne von etwa 9 J, vorzugsweise mindestens etwa 2 J, einstellbar ist.

9. Handgeführtes Bohr- und/oder Meisselgerät nach einem der vorangehenden Ansprüche, dadurch gekennzeichnet, dass der Schlagkörper (12) eine Masse von etwa 0,2 kg bis etwa 1,5 kg aufweist.

10. Handgeführtes Bohr- und/oder Meisselgerät nach einem der vorangehenden Ansprüche, dadurch gekennzeichnet, dass der Permanentmagnet (14) eine Remanenz grösser als 0,9 T bei einer Koerzitivfeldstärke aufweist, die grösser ist als 600 kA/m und vorzugsweise ein Seltenerdmagnet ist, der beispielsweise eine Legierung aus NdFeB oder SmCo umfasst.
